# EUROPEAN PATENT APPLICATION

(11) **EP 2 455 802 A1**
(43) Date of publication of application: **23.05.2012**
(21) Application number: 10799658.9
(22) Date of filing: 03.03.2010
(51) Int. Cl.: G02F 1/1343, G02F 1/1337, G02F 1/1368

(54) **LIQUID CRYSTAL DISPLAY DEVICE**

(30) Priority: 15.07.2009 JP 2009167199
(71) Applicant: Sharp Kabushiki Kaisha, Osaka-shi, Osaka 545-8522 (JP)
(72) Inventor: ITOH, Ryohki, Osaka-shi Osaka 545-8522 (JP); YAMADA, Takaharu, Osaka-shi Osaka 545-8522 (JP); HISADA, Yuhko, Osaka-shi Osaka 545-8522 (JP); HIRIUCHI, Satoshi, Osaka-shi Osaka 545-8522 (JP)
(74) Representative: Zinke, Thomas
(86) International application number: PCT/JP2010/053452
(87) International publication number: WO 2011/007596

(57) **Abstract**

The present invention provides a liquid crystal display device with excellent display performance which has a high pixel aperture design and can avoid alignment disorder of liquid crystal molecules and improve image roughness. The liquid crystal display device of the present invention includes: a liquid crystal layer between a thin film transistor array substrate and an opposed substrate; and at least one electrode for applying a voltage to the liquid crystal layer. The thin film transistor array substrate includes: a transparent substrate; source lines and gate lines running in longitudinal and transverse directions, respectively, on a main surface of the transparent substrate; a conductive portion in a pixel defined by the source lines and the gate lines; and an insulating film covering the conductive part, and is provided with a contact hole electrically connecting an electrode on the thin film transistor array substrate among the at least one electrode and the conductive part through the insulating film. The opposed substrate comprising a protrusion extending from one end to an other end of the pixel. The at least one electrode is provided with at least one slit between the contact hole and a boundary of the pixel as viewed from a direction of a normal to surfaces of the substrate.

## Description

### TECHNICAL FIELD

The present invention relates to a liquid crystal display device. More specifically, the present invention relates to a vertical alignment mode liquid crystal display device having a structure for controlling the alignment of liquid crystal molecules.

### BACKGROUND ART

Liquid crystal display devices are used in various fields because of their advantages such as thin and light-weight design and low power consumption. Various display modes of liquid crystal display devices are known and one of them is a vertical alignment (VA) mode that provides a high contrast ratio.

Multi-domain vertical alignment liquid crystal display devices (hereinafter, abbreviated as MVA-LCDs) are known as VA mode liquid crystal display devices designed for easy control of the alignment of liquid crystal molecules. The MVA-LCDs have an alignment controlling structure which controls the alignment of liquid crystal molecules having negative dielectric anisotropy by vertically aligning the liquid crystal molecules (see, for example, Patent Documents 1 and 2).

Examples of such alignment controlling structures include protrusions on a substrate and notches (slits) of electrodes for applying a voltage to liquid crystal. These structures may be employed together. These structures enable control of the alignment of liquid crystal molecules in a predetermined direction.

Liquid crystal display devices configured as described are being improved toward smaller pixels to meet demands for higher resolutions and device size reduction. Currently, there is a strong demand for a technique to enhance the pixel aperture ratio.

Patent Document 1: JP 2000-193976 A
Patent Document 2: JP 2006-243317 A

### SUMMARY OF THE INVENTION

### PROBLEMS TO BE SOLVED BY THE INVENTION

However, as disclosed in Patent Document 1, formation of more protrusions on a substrate results in a lower pixel aperture ratio. Therefore, it is preferable that the number of protrusions is reduced to as small as possible. A structure in which the number of protrusions is reduced to increase the distances between the protrusions and the boundaries of pixels may overcome this disadvantage, but has another disadvantage that the alignment of liquid crystal molecules may be unstable in some areas because of its weak ability to control the alignment of liquid crystal molecules.

A structure as disclosed in Patent Document 2 in which slits are formed in peripheral areas of electrodes for applying a voltage to liquid crystal to control the alignment of the liquid crystal molecules may not have sufficient ability to control the alignment of liquid crystal molecules. Increasing the number of slits may be one possible way to enhance the ability to control the alignment of liquid crystal molecules but may hinder the production of a high pixel aperture ratio design.

In addition, in the case of a VAmode liquid crystal display device, the probability of alignment disorder of liquid crystal molecules tends to be high in areas located around contact holes in a thin film transistor array substrate when the substrate is viewed from the direction of the normal. Alignment disorder of liquid crystal molecules reduces the transmittance of light and therefore reduces the luminance of the liquid crystal display device. In addition, the disorder also reduces the response speed and therefore aligns liquid crystal molecules in a plurality of pixels in different directions, resulting in non-uniform display. Consequently, a rough image is displayed. As described above, VAmode liquid crystal display devices should be improved to enhance light transmittance and prevent image roughness.

The present invention was made in view of the above problems and an object thereof is to provide a liquid crystal display device with excellent display performance which has a high pixel aperture ratio design, does not cause alignment disorder of liquid crystal molecules, and therefore has improved light transmittance and is improved in terms of image roughness.

### MEANS FOR SOLVING THE PROBLEMS

The present inventors studied various VA mode liquid crystal display devices and found that a protrusion for controlling the alignment of liquid crystal molecules is preferably formed on an opposed substrate in terms of the pixel aperture ratio and simplicity of production processes, and that the protrusion preferably extends from one end to the other end of each pixel in order to increase the pixel aperture ratio. The present inventors also found that the probability of alignment disorder of liquid crystal molecules tends to be high in areas located around contact holes in a thin film transistor array substrate when the substrate is viewed from the direction of the normal. Further, the present inventors found that electrodes for applying a voltage to a liquid crystal layer have an ability to sufficiently control the alignment of liquid crystal molecules in the case that a slit for controlling the alignment of liquid crystal molecules is formed around the contact holes. Thus, the present inventors achieved a liquid crystal display device with excellent display performance which has a high pixel aperture ratio design with a protrusion and a slit arranged as described above causes less alignment disorder of liquid crystal molecules, and therefore has improved light transmittance and is improved in terms of image roughness. With these findings to solve the above problems, the present inventors completed the present invention.

Specifically, the present invention provides a liquid crystal display device which includes: a liquid crystal layer between a thin film transistor array substrate and an opposed substrate; and at least one electrode for applying a voltage to the liquid crystal layer. The thin film transistor array substrate includes: a transparent substrate; source lines and gate lines running in longitudinal and transverse directions, respectively, on a main surface of the transparent substrate; a conductive portion in a pixel defined by the source lines and the gate lines; and an insulating film covering the conductive part, and is provided with a contact hole electrically connecting an electrode on the thin film transistor array substrate among the at least one electrode and the conductive part through the insulating film. The opposed substrate includes a protrusion extending from one end to an other end of the pixel. The at least one electrode is provided with at least one slit between the contact hole and a boundary of the pixel as viewed from a direction of a normal to surfaces of the substrate.

The liquid crystal display device of the present invention changes the retardation of the liquid crystal layer by changing a voltage applied to the liquid crystal layer, and thereby makes a display. More specifically, the liquid crystal display device of the present invention is a VA mode liquid crystal display device in which the alignment of liquid crystal molecules is controlled by the protrusion and the slit of the pixel electrode. The VAmode is a mode using negative liquid crystal having negative dielectric anisotropy. In this mode, liquid crystal molecules are aligned in a direction substantially perpendicular to substrate surfaces while a voltage lower than a threshold value (e.g. no voltage) is applied; and the liquid crystal molecules are tilted in a direction substantially horizontal to the substrate surfaces while a voltage not lower than the threshold value is applied. The term "liquid crystal molecules having negative dielectric anisotropy" refers to liquid crystal molecules having a larger dielectricity along the short axis than along the long axis.

The source lines and the gate lines on the thin film transistor array substrate are lines for transmitting signals to a plurality of pixels for display. The pixels, which are defined by the source lines and the gate lines, each include a conductive part. The structure of the conductive part is specifically described later.

The insulating film covering the conductive part is a film made of an organic insulating material or an inorganic insulating material such as an inorganic oxide and an inorganic nitride, and the material and thickness thereof are not particularly limited.

The contact hole is typically formed in the insulating film by performing etching, such as dry etching and wet etching, on the insulating film. The planar shape and size of the contact hole viewed from the direction of the normal to the substrate surfaces are not particularly limited. For example, the planar shape may be polygonal (e.g. square, rectangular, triangle), or may be circular or ellipsoid.

The electrode on the thin film transistor array substrate specifically refers to pixel electrodes. Typically, the pixel electrodes are provided in the respective pixels and used to apply a voltage to the liquid crystal layer. Each of the pixel electrodes is connected to a corresponding conductive part through a corresponding contact hole. The pixel electrodes can serve as reflective areas or transmissive areas.

The opposed substrate has a protrusion for controlling the alignment of liquid crystal molecules. The protrusion extends from one end to the other end of a pixel for a higher pixelapertureratiodesign. In order to align the liquid crystal molecules uniformly in the pixels, it is preferable to form protrusions which pass over all the pixels through center parts thereof along the same longitudinal or transverse direction. The opposed substrate further includes a common electrode facing the pixel electrodes.

In the present invention, in order to reduce alignment disorder of the liquid crystal molecules around the contact holes, at least one slit is formed between a contact hole and a boundary of a pixel on an electrode, as viewed from the direction of the normal to the substrate surfaces. The electrode where the slit is formed may be a pixel electrode or an opposed electrode on the opposed substrate. The shape, number, and other characteristics of slits are not particularly limited and can be appropriately determined based on a consideration of the liquid crystal molecule alignment. The detail of the slit is given later.

The structure of the liquid crystal display device of the present invention is not particularly limited by other components, provided that it essentially includes the above-mentioned components.

In one aspect of the liquid crystal display device of the present invention, for example, the thin film transistor array substrate includes a thin film transistor near an intersection of the gate lines and the source lines, and the conductive part is electrically connected to a drain electrode of the thin film transistor.

The thin film transistor includes gate electrodes connected to the gate lines, source electrodes connected to the source lines, and drain electrodes, and further includes a semiconductor layer serving as a channel of the thin film transistor. The conductive part is a line or the like which is electrically connected to a drain electrode of the thin film transistor, and is electrically connected to a pixel electrode through the contact hole.

In another aspect of the liquid crystal display device of the present invention, the thin film transistor array substrate includes a storage capacitor line arranged across the source lines and running between the gate lines, and the conductive part is a storage capacitor electrode facing the storage capacitor line.

The storage capacitor line and the storage capacitor electrode together constitute a storage capacitor for compensation of a liquid crystal capacitor formed by each pixel electrode and the common electrode. Typically, the storage capacitor is constituted by a storage capacitor line and a pixel electrode or a storage capacitor electrode electrically connected to a pixel electrode.

In a preferred aspect of the liquid crystal display device of the present invention, each slit extends in the direction across the protrusion, and the liquid crystal molecules in the liquid crystal layer are aligned into two directions while a voltage is applied. This structure allows a high pixel aperture ratio design and facilitates formation of the two-alignment-direction liquid crystal display device with excellent display performance.

In one aspect of the liquid crystal display device of the present invention for enhancing the ability to control the alignment of liquid crystal molecules, the at least one slit include a plurality of slits, and the slits are arranged from one end to an other end of the pixel across the longitudinal direction of the protrusion.

In the case that the length of the slits decreases against the distance from a contact hole, the ability to control the alignment of liquid crystal molecules can be enhanced in an area with a high probability of alignment disorder of the liquid crystal molecules. In addition, a high pixel aperture design can be achieved by forming shorter slits in an area far from the contact hole in which alignment disorder of the liquid crystal molecules is less likely to occur.

The distance between the protrusion and the boundary of the pixel in the liquid crystal display of the present invention is preferably longer than 20 µm. With this structure, the light transmittance and image roughness can be improved.

In common liquid crystal panels, the maximum pixel pitch is typically about 300 µm, and the distance between a protrusion and a boundary of a pixel is 150 µm in the case that the protrusion is formed in a center part of the pixel. In order to achieve the effects of the present invention by general liquid crystal display devices in which the above value is set as the maximum pitch, the distance between the protrusion and the boundary of the pixel is preferably not longer than 150 µm.

In the liquid crystal display device of the present invention, the length of the slit is preferably not shorter than about half of the distance between the protrusion and the boundary of the pixel. In terms of the ability to control the alignment of liquid crystal molecules, the liquid crystal display device of the present invention is preferably designed, for example, as follows: the distance between the protrusion and the boundary of the pixel is longer than 20 µm and not longer than 150 µm; and the slit is not shorter than about half of the distance between the protrusion and the boundary of the pixel. In this case, the viewing angle is wide, the luminance is enhanced, and the response speed is unlikely to slow down. Therefore, the liquid crystal display device does not cause image roughness and is excellent in display performance.

The above embodiments may be combined optionally within the scope of the present invention.

### EFFECTS OF THE INVENTION

The liquid crystal display device of the present invention includes a protrusion on an opposed substrate and at least one slit for controlling the alignment of liquid crystal molecules in an electrode for applying a voltage to a liquid crystal layer. The slit is arranged between a contact hole in a thin film transistor array substrate and a boundary of a pixel, as viewed from a direction of a normal to the substrate. With this structure, a higher pixel aperture ratio design can be achieved and alignment disorder can be reduced. Consequently, the liquid crystal display device has high light transmittance, causes no image roughness, and is excellent in display performance.

### BRIEF DESCRIPTION OF THE DRAWINGS

Fig. 1 is a magnified plane view schematically illustrating the structure of a pixel in a liquid crystal display device according to the first embodiment;
Fig. 2(a) is a schematic cross-sectional view along the A-B line in Fig. 1, Fig. 2(b) is a magnified plane view schematically illustrating the structure of an array substrate with pixel electrodes omitted, and Fig. 2(c) is a schematic plane view of pixel electrodes and protrusions;
Fig. 3 is a magnified plane view schematically illustrating the structure of a pixel of another liquid crystal display device according to the first embodiment;
Figs. 4(a) and (b) are magnified plane views each schematically illustrating the structure of a pixel of a liquid crystal display device according to the second embodiment; and
Figs. 5-1(a) to (c) are magnified plane views each schematically illustrating the structure of a pixel in other liquid crystal display devices according to the second embodiment, and Figs. 5-2(d) to (f) are magnified plane views schematically illustrating the structure of a pixel in other liquid crystal display devices according to the second embodiment.

### MODES FOR CARRYING OUT THE INVENTION

Hereinafter, the present invention is described in more detail by way of embodiments referring to drawings, but the present invention is not limited to these embodiments.

### First embodiment

The present embodiment is described by way of an example of a VA mode transmissive liquid crystal display device in which liquid crystal molecules in each pixel are aligned in two directions.

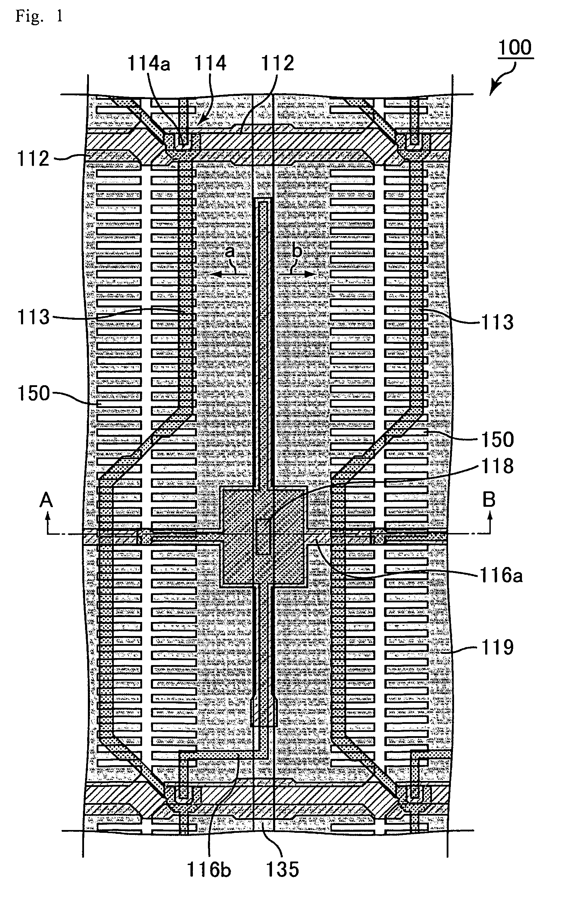

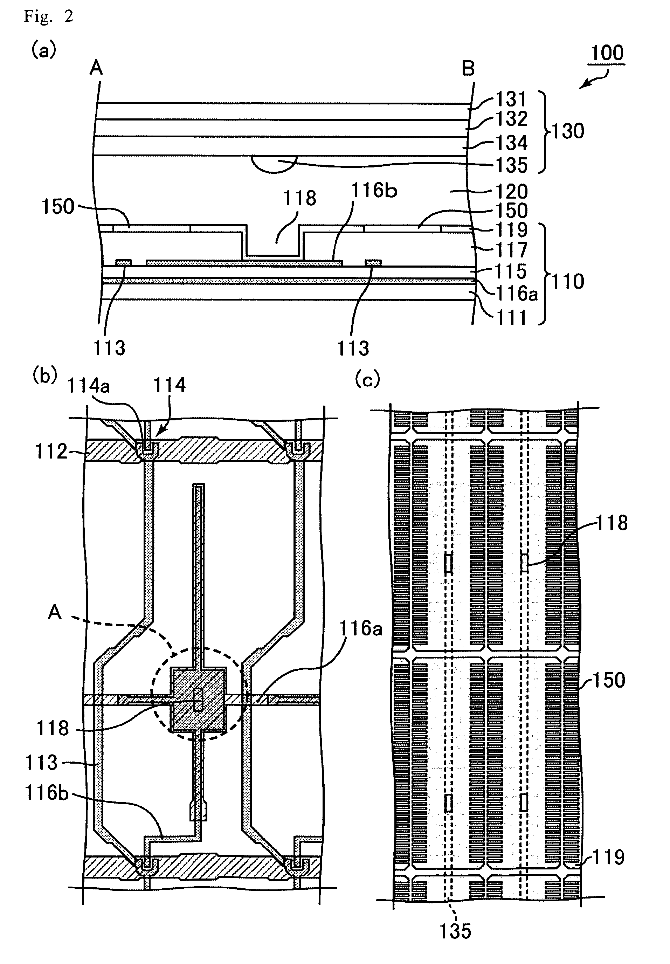

Fig. 1 is a magnified plane view schematically illustrating the structure of a pixel in a liquid crystal display device according to the present embodiment. Fig. 2(a) is a schematic cross-sectional view along the A-B line in Fig. 1, Fig. 2(b) is a magnified plane view schematically illustrating the structure of an array substrate with pixel electrodes omitted, and Fig. 2(c) is a schematic plane view of pixel electrodes and protrusions.

As illustrated in Figs. 1 and 2(a), a liquid crystal display device 100 of the present embodiment includes a TFT array substrate 110, an opposed substrate 130 facing the array substrate 110, and a liquid crystal layer 120 sandwiched between the TFT array substrate 110 and the opposed substrate 130.

The TFT array substrate 110 includes a plurality of gate lines 112 and a storage capacitor line (hereinafter, also referred to as "Cs line") 116a running parallel to one another on a glass substrate 111 having a base coat film. The Cs line 116a is shared by pixels in the same line among pixels arranged in a matrix.

The gate lines 112 and the Cs line 116a are covered with a gate insulating film 115. The gate insulating film 115 is constituted by a SiO₂ film, a SiN film, a laminate film of SiN and SiO₂, or the like. A plurality of source lines 113 are formed on the gate insulating film 115. The source lines 113 are parallel linear lines with angled parts and cross the gate lines 112. TFTs 114, which serve as switching elements, are formed at the intersections of the gate lines 112 and the source lines 113.

The TFTs 114 are located at the left lower corner of the respective pixels and each include a gate electrode connected to a gate line 112 and a source electrode connected to a source line 113, a drain electrode 114a, and a semiconductor layer (not shown) serving as a channel of the TFT 114. The semiconductor ismadeofamorphoussilicone (a-Si), polysilicon, single crystal silicon, or the like. The semiconductor layer is formed on the gate insulating film 115, and the source electrode and the drain electrode 114a are formed in contact with the semiconductor layer. The drain electrode 114a extends from the left lower corner to the center of the pixel, and a part facing the Cs line 116a serves as a Cs electrode 116b.

The source electrode, the drain electrode 114a, and the Cs electrode 116b are covered with an interlayer insulating film 117 formed by a laminate film of SiO₂ and SiN, a laminate film of SiN with both surfaces covered with SiO₂ a SiO₂ film, a SIN film, or the like. The interlayer insulating film 117 has a contact hole 118 overlapping the Cs electrode 116b, as viewed from the direction of the normal to the substrate.

A pixel electrode 119 for applying a voltage to the liquid crystal layer 120 is formed on the interlayer insulating film 117. Here, IZO (Inidium-Zinc-Oxide) electrodes are employed as the pixel electrode 119.

Each of the pixels defined by the gate lines 112 and the source lines 113 includes the pixel electrode 119, and the pixel electrode 119 is electrically connected to a conductive part through the contact hole 118. Here, the conductive part corresponds to the Cs electrode 116b connected to the drain electrode 114a of the TFT 114. With this structure, the pixel electrodes 119 can be individually and selectively controlled by the TFTs 114. The storage capacitor for maintaining the drain voltage is formed by a capacitor between the Cs line 116a and the Cs line 116b, which uses the gate insulating film 115 as a dielectric.

Examples of conductive films include transparent conductive films made of a conductive material having high light transmittance such as ITO (Indium-Tin-Oxide), IZO, IDIXO (indium oxide-indium zinc oxide; In₂O₃(ZnO)ₙ), and SnO₂; reflective conductive films made of a conductive material having high light reflectance such as aluminum (Al), silver (Ag), chromium (Cr), iron (Fe), cobalt (Co), nickel (Ni), copper (Cu), tantalum (Ta), tungsten (W), platinum (Pt), and gold (Au), and an alloy of these; and a laminate of a transparent conductive film and a reflective conductive film. Patterning of such a conductive film is performed by photolithography or the like.

The gate lines 112, the source lines 113, the Cs line 116a, and the Cs electrode 116b are made of a metal material (e.g. Cu, Ag) for the purpose of reducing the resistance. The electrodes of the TFTs 114 such as the gate electrodes are also made of a metal material.

The liquid crystal layer 120 is not particularly limited, as long as it is one used in VAmode liquid crystal display devices. Examples thereof include nematic liquid crystal having negative dielectric anisotropy. The vertical alignment is typically achieved by using a vertical alignment film (not shown) made of polyimide or the like. The liquid crystal molecules in the liquid crystal layer 120 are aligned in a direction substantially perpendicular to the surfaces of alignment films formed on the surfaces of the TFT array substrate 110 and the opposed substrate 130 facing the liquid crystal layer 120 while no voltage is applied (Off state); and the liquid crystal molecules are tilted in a horizontal direction while a voltage higher than a threshold value is applied (On state).

The opposed substrate 130 is, for example, a color filter substrate and a color filter layer 132, and a common electrode 134 are formed on the main surface of a glass substrate 131. The common electrode 134 is an ITO electrode formed by sputtering or the like. The opposed substrate 130 further includes a protrusion 135, which is a structure for controlling the alignment of liquid crystal molecules. The protrusion 135 passes over a pixel from one end to the other end thereof through a center part. This structure allows the liquid crystal to be aligned in two directions of the arrows a and b in Fig. 1 within' the pixel. The protrusion 135 is formed by etching or the like using a photosensitive resin.

The TFT array substrate 110 and the opposed substrate 130 configured as described above are attached to each other with a sticker (sealing material) of an UV curing resin, a thermosetting resin, or the like. The liquid crystal is sealed between these substrates.

Although not shown in the figures, a polarizing plate, a retardation film, and the like are optionally formed on the surfaces of the glass substrates 111 and 131 opposite to the surfaces thereof facing the liquid crystal layer 120. Thus, a liquid crystal display device 100 is formed. Examples of polarizing plates include one including a poly vinyl alcohol (PVA) film with a dichroic anisotropic material (e.g. an iodine complex) adsorbed and aligned thereon.

In the liquid crystal display device 100 configured as described above, when a scanning signal is transmitted through the gate lines 112 of the TFT array substrate 110, the semiconductor layer of the TFT 114 is made conductive and an image signal transmitted through the source lines 113 is transmitted to the pixel electrode 119. Then, the alignment of liquid crystal molecules in the liquid crystal layer 120 is controlled based on the image signal transmitted to the pixel electrode 119, whereby an image is displayed.

In the case that only the protrusion 135 is formed as a structure for controlling the alignment of liquid crystal molecules, the probability of alignment disorder of liquid crystal molecules tends to be high in the area around the contact hole 118 defined by the dotted line A in Fig. 2(b) and the periphery thereof. In the present embodiment, in order to overcome it, each pixel electrode 119 has slits 150 in areas between the contact hole 118 and the boundary of the pixel as shown in Fig. 2(c), as viewed from the direction of the normal to the substrate surfaces.

The slits 150 are formed in the direction perpendicular to the protrusion 135 and arranged from one end to the other end of each pixel across the longitudinal direction of the protrusion 135. Since the slits 150 formed in the pixel electrodes 119 and the protrusion 135 formed on the opposed substrate 130 suitably align the liquid crystal molecules in the liquid crystal layer 120 in the two directions of the arrows a and b when a voltage is applied, uniform image display can be achieved in a wide viewing angle.

The width and length of the slits 150 are not particularly limited, but the slits 150 are preferably fine slits with a width of 2 to 7 µm based on a consideration of the ability to align liquid crystal molecules, the pixel aperture ratio, and the like.

In the case that the distance between the protrusion 135 and the boundary of each pixel is longer than 20 µm and not longer than 150 µm, the length of the slits 150 is preferably not shorter than about half of the distance between the protrusion 135 and the boundary of each pixel in terms of the ability to control the alignment of liquid crystal molecules. In the case that the length of the slits 150 is about half of the distance between the protrusion 135 and the boundary of each pixel, high luminance is ensured.

Since the slits 150 are arranged from one end to the other end of each pixel across the longitudinal direction of the protrusion 135, alignment disorder of liquid crystal molecules can be avoided even in the corners of the pixels in which alignment disorder is likely to occur.

As described above, the liquid crystal display device 100 of the present embodiment can avoid alignment disorder of liquid crystal molecules around the contact holes 118. Therefore, even in the case that only one protrusion 135 equally dividing pixels is formed on the opposed substrate 134, the liquid crystal molecules are suitably aligned. In addition, even in the case that the distance between the protrusion 135 and the boundary of each pixel is longer than, for example, 20 µm, the alignment direction of the liquid crystal molecules can be controlled by the slits 150. Accordingly, it is possible to provide a liquid crystal display device that has a high pixel aperture ratio and high light transmittance and is excellent in display performance without image roughness.

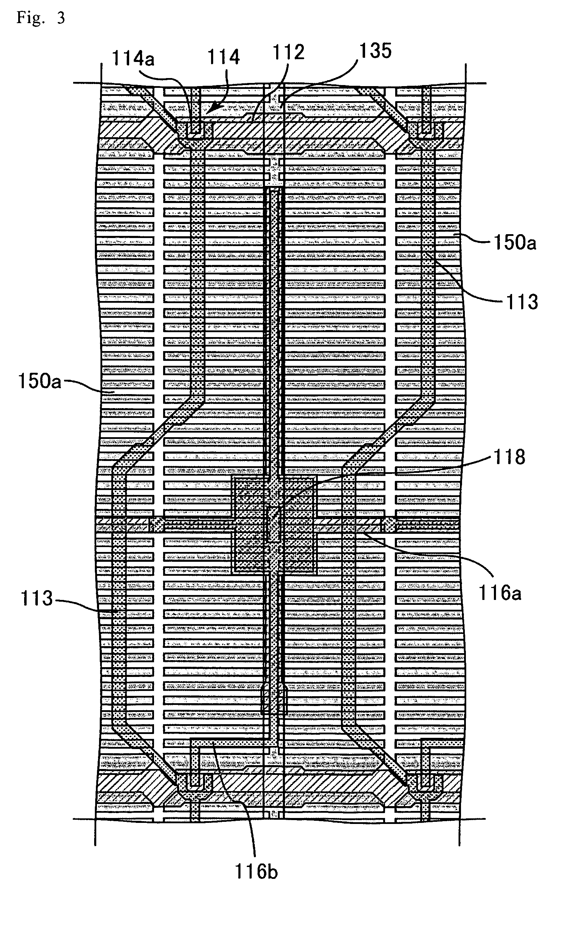

In order to more suitably align the liquid crystal molecules in the area defined by the dotted line A in Fig. 2(b), the slits 150 may be elongated to the area overlapping the contact hole 118 as shown in Fig. 3.

Fig. 3 is amagnifiedplane view schematically illustrating the structure of a pixel of another liquid crystal display device of the first embodiment and illustrates another structure of slits in the first embodiment. Since slits 150a extend to the area overlapping the contact hole 118 as shown in Fig. 3, alignment disorder of liquid crystal molecules in the area defined by the dotted line A can be sufficiently reduced. Here, since the slits 150a are formed over the substantially entire surface of the pixel, the light transmittance is slightly poor. However, the effect of improving alignment disorder of the liquid crystal molecules is enhanced, and therefore the effect of improving image roughness is enhanced.

### Second embodiment

The present embodiment is described by way of an example in which the positions of slits are different from those in the first embodiment. The same numbers are assigned to components having the same structures as in the first embodiment and the description thereof is omitted.

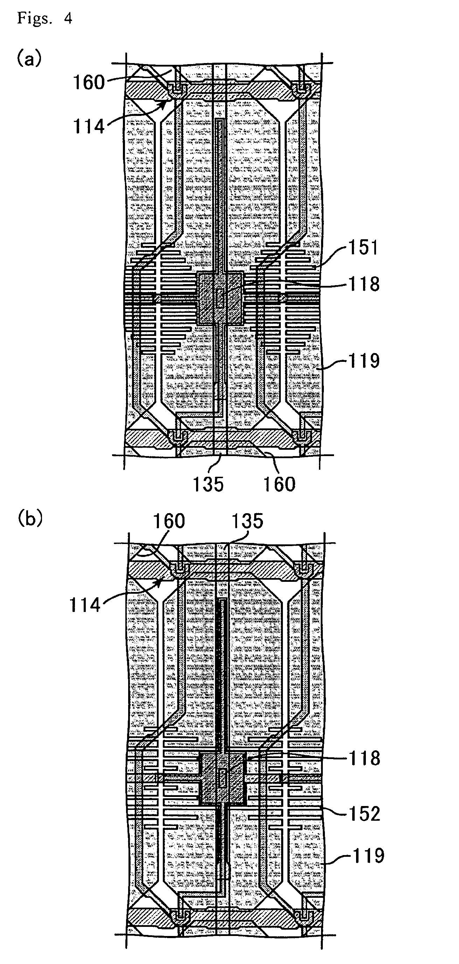

Figs. 4(a) and 4(b) are magnified plane views each schematically illustrating the structure of a pixel of a liquid crystal display device of the present embodiment. In the first embodiment, the slits 150 and 150a are arranged from one end to the other end of each pixel across the longitudinal direction; in the present embodiment, as shown in Figs. 4(a) and (b), slits 151 and 152 are formed near the contact hole 118 between the protrusion 135 and the boundary of each pixel.

In the example of Fig. 4(a), the length of the slits 151 decreases against the distance from the contact hole 118. Namely, slits 151 closer to the contact hole 118, that is, slits in an area in which alignment disorder of liquid crystal molecules is likely to occur are designed to be longer. This structure provides a sufficient level of the ability to control the alignment of liquid crystal molecules and reduces the area of slits, and therefore allows a further higher pixel aperture ratio design.

In the example of Fig 4(b), slits 152 are not formed in the area overlapping the Cs line 116a to avoid an influence of the electric field of the lower layer to the pixel electrode 119.

The liquid crystal display devices having the structures of Figs. 4(a) and (b) can also reduce alignment disorder of liquid crystal molecules and are excellent in display performance like those of the first embodiment. Here, slits around the contact holes 118 are not limited to the slits 151 and 152, and the number, length, shape, and other characteristics thereof can be appropriately determined based on a consideration of the alignment state of the liquid crystal molecules.

In Figs. 4(a) and (b), openings 160 are formed in the corners of the pixel electrodes 119. These openings 160 are structures for enhancing the light transmittance by reducing alignment disorder of the liquid crystal molecules, like the slits 150 and 150a. Therefore, slits may be formed instead of the openings 160.

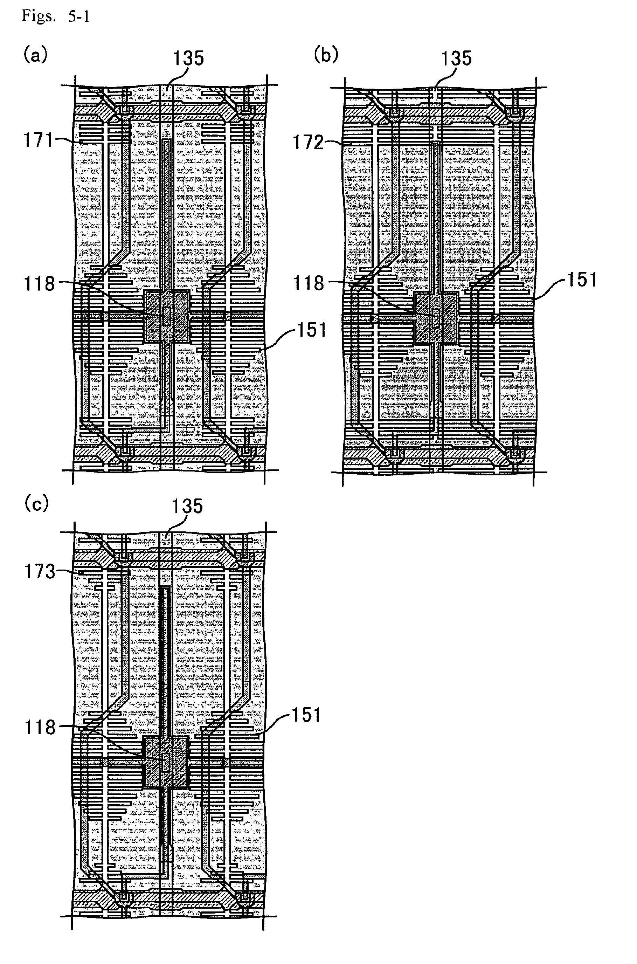

For example, as shown in Figs. 5-1(a) to (c) and 5-2(d) to (f), slits 171 to 176 may be formed in the corners of the pixel electrode 119 shown in Fig. 4(a). Figs. 5-1(a) to (c) and 5-2(d) to (f) are plane views each schematically illustrating an example in which slits are formed instead of the opening 160.

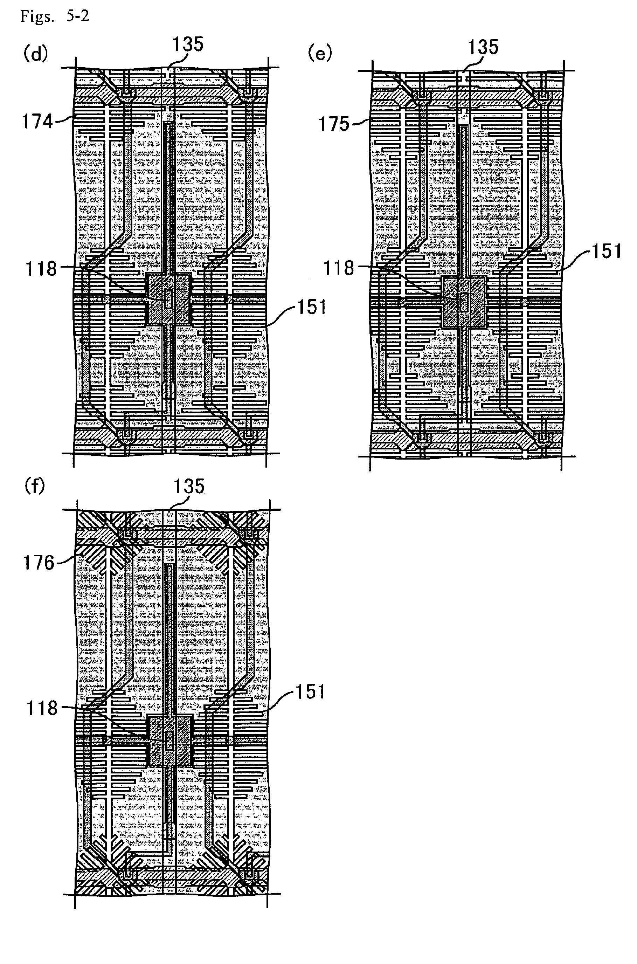

In Fig. 5-1(a), the slits 171 extend in the direction perpendicular to the protrusion 135 and serve to suitably align the liquid crystal molecules in two directions even in the corners of the pixel in which the ability to control the alignment of the liquid crystal molecules is weak. The slits 172 in Fig. 5-1(b) are a longer form of the slits 171 and extend to the vicinity of the protrusion 135. In the case that the slits 171 are elongated to the vicinity of the protrusion 135, the liquid crystal in the corners of pixels can be controlled in a direction closer to the normal direction although an influence of the gate voltage tends to cause alignment disorder of the liquid crystal in the corners. The length of slits 173 in Fig. 5-1(c) increases proportionally to the distance from the contact hole 118. The number of slits 173 is not particularly limited and may be increased like slits 174 and 175 shown in Figs. 5-2(d) and (e). The number of slits 171 to 175 can be appropriately determined based on a consideration of the alignment state of the liquid crystal molecules.

Further, as shown in Fig. 5-2(f), slits 176 may be formed in directions inclined to the corners of the pixel. The inclination to the pixel corners is not particularly limited and can be determined based on a consideration of the alignment state of liquid crystal molecules. In the case that the slits are inclined by about 45°, the corners of the pixel electrode 119 are no longer alignment disorder areas. Namely, the display quality is improved.

Regarding the slits 171 to 176, in the case that the distance between the protrusion 135 and the boundary of the pixel is longer than 20 µm and not longer than 150 µm like the slits 150 in the first embodiment, the length of the slits 171 to 176 is more preferably not shorter than about half of the distance between the protrusion 135 and the boundary of the pixel in terms of the ability to control the alignment of liquid crystal molecules.

Namely, the first embodiment can be regarded as one example of the present embodiment in which the slits 151 near the contact holes 118 and/or the slits 171 to 175 in the corners of the pixels are arranged across the longitudinal direction of the protrusion 135.

Hereinafter, the embodiments are described by way of examples and comparative examples.

### Example 1

The liquid crystal display device 100 of the first embodiment shown in Fig. 1 was measured for light transmittance. The thickness of the liquid crystal layer 120 was 4.5 µm. The distance between the protrusion 135 and the boundary of each pixel was 40.5 µm. The width of slits 150 was 3.5 µm and the length thereof was 21 µm.

The liquid crystal display device 100 was lit and measured for light transmittance using a color luminance meter (BM-5A produced by TOPCON) at a measurement angle of 2°. The conditions of lighting the liquid crystal display device 100 were as follows: gate voltage (Vgh) 28V; source voltage (Vs) ± 6.75 V; common electrode voltage (Vcom) 0 V; and storage capacitor voltage (Vcs) 0 V.

The value obtained by the above-mentioned measurement was treated as light transmittance. This value was compared with that of Comparative Example 1 which is described below.

The liquid crystal display device was evaluated for image roughness by visual observation of an image displayed on the screen based on the following criteria:
○: no roughness was observed;
Δ: roughness was alleviated; and
x: roughness was observed.
The result is shown in Table 1 below.

### Comparative Example 1

No slit was formed in pixel electrodes 119. Except for this, the light transmittance and image roughness were determined in the same manner as in Example 1. The result is shown in Table 1.

### Examples 2 to 4

In Examples 2, 3, and 4, slits were formed as shown in Figs. 3, 5-1(c), and 4(a), respectively. Similarly, in these examples, the distance between the protrusion 135 and the boundary of each pixel was 40.5 µm and the width of slits 150 was 3.5 µm. The lengths of slits 150a, slits 151, and slits 173 were 44.5 µm, 5 to 33.5 µm, and 8 to 21 µm, respectively. The light transmittance and image roughness were determined in the same manner as in Example 1, except for the above features. The results are shown in Table 1.

**[Table 1]**

| | Example 1 | Example 2 | Example 3 | Example 4 | Comparative Example 1 |
|---|---|---|---|---|---|
| Average transmittance (%) | 5.54 | 5.09 | 4.64 | 4.60 | 4.53 |
| (Average transmittance)/ (Average transmittance of Comparative Example 1) | 1.22 | 1.12 | 1.02 | 1.02 | 1.00 |
| Roughness | ○ | ○ | Δ | Δ | × |

As clearly illustrated in Table 1, the light transmittance was enhanced and image roughness was improved in Examples 1 and 2 because of their structures in which the slits 150 or 150a were formed across the longitudinal direction of the protrusion 135 between the contact hole 118 near the center of each pixel and the boundary of the pixel. The structures in which the slits 173 or the openings 160 were formed in the corners of the pixel electrodes 119 in addition to the slits 151 as in Examples 3 and 4 were also confirmed to improve roughness although their light transmittances were not as good as those of Examples 1 and 2. Thus, both the light transmittance and roughness were improved in all of Examples 1 to 4 compared to Comparative Example 1. For example, the structure of Example 1 in which the distance between the protrusion 135 and the boundary of each pixel was 40.5 µm and the fine slits 150 having a length not shorter than half of the distance were formed improved both the transmittance and quality (roughness). Namely, since a structure in which the distance is half of 40.5 µm is also expected to produce an identical effect, the lower limit of the distance between the protrusion 135 and the boundary of each pixel can be set to 20 µm.

Although the above embodiments are described by way of examples in which the liquid crystal molecules are aligned in two directions, the present invention is not limited to this structure and the liquid crystal molecules may be aligned in four directions or any number of directions.

Although the above embodiments are described by way of examples in which the slits are formed in the pixel electrodes 119, the present invention is not limited to this structure and the slits may be formed in the common electrode 134 on the CF substrate side.

Although the above embodiments are described by way of examples in which the protrusion 135 for controlling the alignment of liquid crystal molecules is formed only on the CF substrate side, the present invention is not limited to this structure and the protrusion may be formed on the TFT array substrate 110 side, too.

Although the above embodiments are described by way of examples in which the Cs electrode 116b serves as a conductive part connected to the pixel electrode 119 through the contact hole 118, the present invention is not limited to this structure. The conductive part may be a line electrically connected to the drain electrode 114a included in the TFT 114, or may be another conductive component.

Although the above embodiments are described by way of examples in which the source lines 113 are linear lines with angled parts, the present invention is not limited to this structure. The source lines 113 may be linear and may form a lattice pattern with the gate lines 112.

In the above embodiments, the alignment of liquid crystal molecules is controlled by the protrusion and the slits. In addition to these, the alignment may be controlled by performing a PSA (polymer sustained alignment) treatment to control the tilt direction of the liquid crystal in advance. The PSA treatment refers to a treatment for forming a polymer that aligns liquid crystal in a certain direction on a substrate, specifically by mixing a polymerizable component (e.g. monomer, oligomer) with the liquid crystal and polymerizing the polymerizable component while the liquid crystal molecules are tilted by a voltage applied thereto.

Any of the structures of the above embodiments may be combined within the scope of the present invention.

The present application claims priority to Patent Application No. 2009-167199 filed in Japan on July 15, 2009 under the Paris Convention and provisions of national law in a designated State, the entire contents of which are hereby incorporated by reference.

### EXPLANATION OF SYMBOLS

- 100: Liquid crystal display device
- 110: TFT array substrate
- 111: Glass substrate
- 112: Gate line
- 113: Source line
- 114: TFT
- 114a: Drain electrode
- 115: Gate insulating film
- 116a: Cs line
- 116b: Cs electrode
- 117: Interlayer insulating film
- 118: Contact hole
- 119: Pixel electrode
- 120: Liquid crystal layer
- 130: Opposed substrate
- 132: Color filter layer
- 134: Common electrode
- 135: Protrusion
- 150, 150a, 151, 152, 171 to 176: Slit
- 160: Opening

## Claims

1. A liquid crystal display device comprising:
a liquid crystal layer between a thin film transistor array substrate and an opposed substrate; and
at least one electrode for applying a voltage to the liquid crystal layer,
the thin film transistor array substrate comprising:
a transparent substrate;
source lines and gate lines running in longitudinal and transverse directions, respectively, on a main surface of the transparent substrate;
a conductive portion in a pixel defined by the source lines and the gate lines; and
an insulating film covering the conductive part,
the thin film transistor array substrate being provided with a contact hole electrically connecting an electrode on the thin film transistor array substrate among the at least one electrode and the conductive part through the insulating film,
the opposed substrate comprising a protrusion extending from one end to an other end of the pixel,
the at least one electrode being provided with at least one slit between the contact hole and a boundary of the pixel as viewed froma direction of a normal to surfaces of the substrate.

2. The liquid crystal display device according to Claim 1,
wherein the thin film transistor array substrate comprises a thin film transistor near an intersection of the gate lines and the source lines, and
the conductive part is electrically connected to a drain electrode of the thin film transistor.

3. The liquid crystal display device according to Claim 1,
wherein the thin film transistor array substrate comprises a storage capacitor line arranged across the source lines and running between the gate lines, and
the conductive part is a storage capacitor electrode facing the storage capacitor line.

4. The liquid crystal display device according to any one of Claims 1 to 3,
wherein the slit extends across the protrusion, and liquid crystal molecules in the liquid crystal layer are aligned into two directions while a voltage is applied.

5. The liquid crystal display device according to any one of Claims 1 to 4,
wherein the slit comprises a plurality of slits, and
the slits are arranged from one end to an other end of the pixel across the longitudinal direction of the protrusion.

6. The liquid crystal display device according to any one of Claims 1 to 5,
wherein the slit has a length that decreases against a distance thereof from the contact hole.

7. The liquid crystal display device according to any one of Claims 1 to 6,
wherein a distance between the protrusion and the boundary of the pixel is longer than 20 µm.

8. The liquid crystal display device according to any one of Claims 1 to 7,
wherein the distance between the protrusion and the boundary of the pixel is not longer than 150 µm.

9. The liquid crystal display device according to any one of Claims 1 to 8,
wherein the length of the slit is not shorter than about half of the distance between the protrusion and the boundary of the pixel.
